Europäisches Patentamt

European Patent Office

Office européen des brevets

(19)

(11) Veröffentlichungsnummer: **0 482 724 A2**

## (12) EUROPÄISCHE PATENTANMELDUNG

(21) Anmeldenummer: **91250229.1**

(22) Anmeldetag: **20.08.91**

(51) Int. Cl.5: **G06F 15/80**

(30) Priorität: **20.08.90 DE 4026342**

(43) Veröffentlichungstag der Anmeldung:
**29.04.92 Patentblatt 92/18**

(84) Benannte Vertragsstaaten:
**AT BE CH DE FR GB IT LI LU NL SE**

(71) Anmelder: **ATP Arbeitsgruppe Technische Photosynthese GmbH & Co. Produktions KG**
**Neuendorferstrasse 64-69**
**W-1000 Berlin 22(DE)**

(72) Erfinder: **Radebold, Reinhart, Dr.**
**Ouastenhornweg 14 a**
**W-1000 Berlin 22(DE)**
Erfinder: **Radebold, Walter**
**Berlepschstrasse 72 a**
**W-1000 Berlin 37(DE)**

(54) **Durch Computer abgebildete Neuronen.**

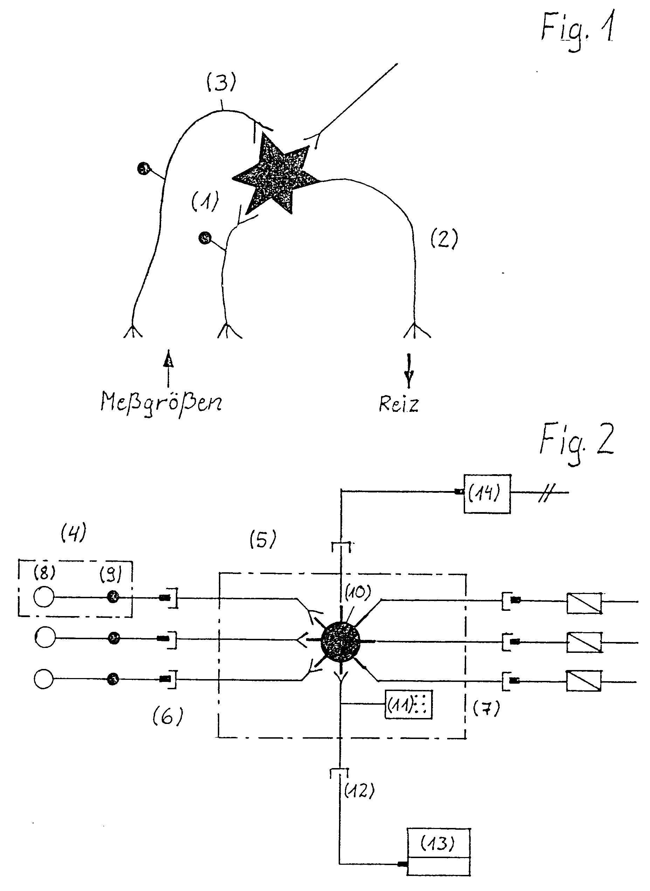

(57) Die vorliegende Erfindung (Fig. 2) besteht aus einem System, das hinsichtlich Struktur und Funktion eine Abbildung des autonomen Nervensystems ist, und das ebenfalls aus nur zwei Bausteinen, 1. sensorischen Neuronen (4) und 2. aktorischen Neuronen (5) besteht und wobei die synaptische Kopplung zwischen beiden Neuronenarten in einem bidirektionalen Datentransfer für sensorspezifische Informationen und schließlich für normierte Meßsignale erreicht wird, sodaß das interne Betriebsprogramm in jedem zyklischen Durchlauf die ausgelesenen Meßsignale in physikalische Meßgrößen umwandeln, und durch Vergleich mit Auswahlkriterien entscheiden kann, ob aus einer Meßgröße, die faktisch jeden beliebigen Wert innerhalb des Meßbereiches annehmen kann, ein sensorischer Reiz mit konstantem Pegel zur Weiterverarbeitung erzeugt oder der Meßwert als uninteressant verworfen werden muß, wobei die Gesamtheit der sensorischen Reize, hierarchisch gestuft, zur Bildung komplexer, miteinander vernetzter Regelkreise verwendet wird.

Fig. 2

Die Erfindung bezieht sich auf ein kompaktes, robustes mikroelektronisches Meß-Überwachungs-Steuer- und Regelsystem mit Sensoren und Aktoren, das sowohl autonom einzusetzen als auch vernetzbar ist, und das in seinem Rechnerteil im wesentlichen aus Mikroprozessor, gepuffertem RAM, interner Uhr, Schnittstellenbaustein, Eingängen und Ausgängen (optional mit eingebautem Terminal) und internem Betriebsprogramm auf EPROM besteht,

Mikroprozessoren werden außer im PC auch in technischen Geräten, und zwar im Zusammenhang mit Sensoren und Aktoren eingesetzt. Dabei ist zu beobachten, daß Mikroprozessoren im überwiegenden Maße entweder nur im Zusammenhang mit Sensoren oder aber im Zusammenhang mit Aktoren eingesetzt werden. Im ersten Fall handelt es sich dabei um Meßdatenerfassungssysteme und Datenlogger, wobei die Aufgabe besteht, physikalische und chemische Größen über angeschlossene Sensoren zu erfassen und zu protokollieren. Im zweiten Fall handelt es darum, etwa in Form von speicherprogrammierbaren Steuerungen, Aktoren in einer fest vorgegebenen Reihenfolge anzusteuern und damit komplizierte Aufgaben aus der Steuerungstechnik zu lösen. Man kann sagen, daß diese beiden Anwendungsgebiete zwei verschiedene Welten darstellen, die sich ohne weiteres nicht miteinander verbinden lassen, da insbesondere die verwendeten Sprachen für die Mikroprozessoren nicht miteinander kompatibel sind. So werden die Betriebsprogramme für Datenlogger und Meßdatenerfassungssysteme beispielsweise in C, BASIC oder Assembler geschrieben, während der Benutzer von speicherprogrammierbaren Steuerungen eine von Firma zu Firma verschiedene Hochsprache zur Programmierung seiner Steuerung erlernen muß. Wenn Mikroprozessoren für Regelaufgaben eingesetzt werden, sie also Sensoren und Aktoren miteinander koppeln und über eine gemeinsame Sprache ansprechen, dann handelt es sich meist um Anwendungen auf dem Gebiet der Prozeßrechner. Es ist typisch, daß hierbei Mikroprozessoren konventionelle Regler nachbilden und insbesondere damit befaßt sind, die mathematischen Zusammenhänge, die für die Regelstrecke typisch sind, zu benutzen, um im Verlauf des eigentlichen Regelprozesses die Führungsgrößen zu berechnen.

Es ist bisher kein mikroelektronisches System bekannt geworden, das Sensoren und Aktoren mit einer gemeinsamen Sprache anspricht und insbesondere Verknüpfungen zur Lösung von Regelaufgaben beinhaltet, die nicht auf einem spezifischen mathematischen Modell einer spezifischen Regelstrecke beruhen, sondern die eine allgemeine Verknüpfung aufweisen, wie etwa das neuronale System in biologischen Organismen (Fig. 1). Struktur und Funktion dieses Systems sind erkennbar unterschiedlich zu den oben genannten technischen Systemen. Wesentliches Kennzeichen der biologischen Systeme ist es, daß das biologische "Meßdatenerfassungssystem" bzw. die sensorischen Neuronen (1) in einer spezifischen Weise, auf die im folgenden zurückzukommen sein wird, mit den Steuerungsorganen, d.h. mit aktorischen Neuronen (2) gekoppelt ist. Diese Kopplung (3) wird als synaptisch [1])bezeichnet, und ihr wesentliches Merkmal ist, daß Meßgrößen, die in einem kontinuierlichen Meßbereich anfallen, und die von unterschiedlichen Sensoren auf ein aktorischen Neuron geleitet werden, dort zur Ausbildung eines einzigen diskreten Steuersignals, eines Reizes, mit einem mehr oder weniger konstanten Pegel führen. Diese Art, biologische Regelkreise zu bilden, unterscheidet sich offenbar wesentlich von der bisher geübten technischen Praxis, mathematische Modelle zur Grundlage von Regelprozessen zu machen.

Die vorliegende Erfindung (Fig. 2) besteht aus einem System, das hinsichtlich Struktur und Funktion eine Abbildung des autonomen Nervensystems ist, und das ebenfalls aus nur zwei Bausteinen, 1. sensorischen Neuronen (4) und 2. aktorischen Neuronen (5) besteht, und zur Bildung eines Systems jeweils ein aktorisches Neuron an seinem Eingang mit einem oder mehreren sensorischen Neuronen, über Steckverbinder und Kabel (6), synaptisch gekoppelt wird, und am Ausgang (7) mit Aktoren gleichfalls über Steckverbinder und Kabel belegt werden kann,

wobei ein sensorisches Neuron (4) ( = Sensor Unit) aus einem oder mehreren beliebigen Sensoren (8) Meßfühler), zugeordneten Adaptermodulen (9) insbesondere mit Speicher für sensorspezifische Daten, Verstärker und Multiplexer besteht, und mit einem Kabel und Steckverbinder versehen ist, wobei das aktorische Neuron (5) ( = Control Unit) insbesondere aus dem Rechnerteil (10), optional mit Terminal (11), sowie Schalteinheiten und Kontrollorganen für die Aktoren besteht, und wobei die synaptische Kopplung zwischen beiden Neuronenarten in einem bidirektionalen Datentransfer für sensorspezifische Informationen, insbesondere Kalibrier-Korrektur- und Kompensationsdaten sowie für Auslesebefehle und schließlich für normierte Meßsignale erreicht wird, sodaß das interne Betriebsprogramm in jedem zyklischen

[1]) Synapsen : Kontaktstellen, an welchen Erregungen von einem Neuron auf ein anderes übergehen.
Faller, Adolf : Der Körper des Menschen, Georg Thieme Verlag, Stuttgart, 4. Auflage, 1970, S. 237

Durchlauf die ausgelesenen, normierten Meßsignale in physikalische Meßgrößen umwandeln, bei Bedarf abspeichern, und insbesondere durch Vergleich mit Auswahlkriterien entscheiden kann, ob aus einer Meßgröße, die faktisch jeden beliebigen Wert innerhalb des Meßbereiches annehmen kann, ein sensorischer Reiz mit konstantem Pegel zur Weiterverarbeitung erzeugt oder der Meßwert als uninteressant verworfen werden muß, wobei die Gesamtheit der sensorischen Reize, hierarchisch gestuft, in jedem Programmzyklus zur Ableitung von aktorischen Reizen mit festem Pegel über entsprechende Steuerkriterien zum Ansprechen der Aktoren und damit zur Bildung komplexer, miteinander vernetzter Regelkreise verwendet wird.

Das System wird über ein Netzwerk oder ein Bussystem (12) mit anderen Systemen gleicher Art und / oder externen Rechnern (13) als Zentrale gekoppelt, sodaß jedes System über seine Kennung ansprechbar ist zwecks Abfrage von Daten, Auslesen des Speichers und Eingabe neuer Auswahl- und Steuerkriterien zur Anpassung der Regelkreise an veränderte Bedingungen, und jedes einzelne System, selbst wenn es im Inselbetrieb autonom arbeitet, Alarmmeldungen beispielsweise an die Zentrale abgeben kann.

Sensorische und aktorische Neuronen sind vorzugsweise in einem Gehäuse mit rundem oder rechteckigen Querschnitt aus schlagfestem Material vorzugsweise wasserdicht gekapselt, mit dichten und zugentlasteten Durchführungen für die Kabel und dichten Steckverbindungen, wobei insbesondere die Gehäuse über Dichtungen in zwei oder mehr Teile aufgegliedert sind, und die Gesamtheit der elektronischen Bauteile in einem der Teile verankert ist, und das Terminal, bestehend aus LC-Anzeige oder Plasmaanzeige und Tastatur und/oder magnetisch zu betätigenden Schaltern vorzugsweise unter einer transparenten Deckelscheibe angeordnet ist.

Die Energieversorgung (14) der sensorischen Neuronen wird vom aktorischen Neuron, die Energieversorgung des aktorischen Neurons sowie der angeschlossenen Aktoren oder deren Schalteinrichtungen von einer separaten Energieversorgungseinheit in gleicher Schutzart wie das aktorische Neuron gewährleistet, wobei die Energieversorgung beispielsweise über zwei getrennte Kreise gleicher Spannung aber unterschiedlicher Stromstärke und Stabilisierung durchgeführt wird.

Die durch die Erfindung erreichten Vorteile bestehen in zweierlei. Zum einen ist ein System geschaffen worden, dessen Betriebsprogramm, beispielsweise in BASIC oder einer anderen Sprache geschrieben, nicht nur die Kalibrierung der Sensoren und die Ausgabe der Steuerdaten für die Aktoren in einem einzigen Programm nebst Protokollierung aller Vorgänge ermöglicht. Sie liegt zum anderen vor allem darin, daß die Verknüpfung zwischen Sensoren und Aktoren pragmatisch über logische Regeln oder Auswahlkriterien erfolgt etwa der Art : wenn ..... die Meßgrößen der verschiedenen Sensoren in bestimmten Bereichen liegen und eine Bewertung der Größen eingeführt wird, dann ..... soll in Steuerwort ausgegeben und damit die Gesamtheit (oder einige) der angeschlossenen Aktoren entsprechend geschaltet werden. Es kann sich dabei um die Ansteuerung der Aktoren mit Steuerworten handeln, die nur Ja/Nein-Befehle zulassen, es können aber auch abgestufte Steuerpegel ausgegeben werden. Dadurch, daß für die Meßgrößen zulässige, unterschiedlich zu bewertende Meßbereiche zugelassen werden durch Einführung von Schwellwerten, und dadurch, daß diese Signalvorgaben zeitlich zyklisch fortlaufend über die angegebenen Auswahlkriterien verarbeitet werden, kann also ein Vorgang, der nicht durch ein mathematisches Modell vorher bekannt ist, überwacht und geregelt werden, und es können Erfahrungen, die mit dem Prozeß gewonnen wurden, in einfacher Weise durch Ändern, Hinzufügen oder Weglassen von Regeln eingebracht werden. Insbesondere ist es möglich, durch hierarchisches Abarbeiten der Regeln und Kopplung der Regeln untereinander, hierarchische Regelkreise aufzubauen.

**Patentansprüche**

Ein kompaktes, robustes mikroelektronisches Meß-Überwachungs-Steuer- und Regelsystem mit Sensoren und Aktoren, das sowohl autonom einzusetzen als auch vernetzbar ist, und das in seinem Rechnerteil im wesentlichen aus Prozessor, gepuffertem RAM, interner Uhr, Schnittstellenbaustein, Eingängen und Ausgängen (optional mit eingebautem Terminal) und internem Betriebsprogramm auf EPROM besteht,

dadurch gekennzeichnet, daß

1. das System hinsichtlich Struktur und Funktion eine Abbildung des autonomen Nervensystems ist,

   aus nur zwei Bausteinen, 1. sensorischen Neuronen und 2. aktorischen Neuronen besteht, und zur Bildung eines Systems jeweils ein aktorisches Neuron an seinem Eingang mit einem oder mehreren sensorischen Neuronen über Steckverbinder und Kabel synaptisch gekoppelt wird, und am Ausgang mit Aktoren gleichfalls über Steckverbinder und Kabel belegt werden kann,

   wobei ein sensorisches Neuron aus einem oder mehreren beliebigen Sensoren (Meßfühler), zugeordneten Adaptermodulen insbesondere mit Speicher für sensorspezifische Daten, Verstärker und Multiplexer besteht, und mit einem Kabel und Steckverbinder versehen ist,

wobei das aktorische Neuron insbesondere aus dem Rechnerteil, optional mit Terminal, sowie Schalteinheiten und Kontrollorganen für die Aktoren besteht,

und wobei die synaptische Kopplung zwischen beiden Neuronenarten in einem bidirektionalen Datentransfer für sensorspezifische Informationen, insbesondere Kalibrier-Korrektur- und Kompensationsdaten sowie für Auslesebefehle und schließlich für normierte Meßsignale erreicht wird,

sodaß das interne Betriebsprogramm in jedem zyklischen Durchlauf die ausgelesenen, normierten Meßsignale in physikalische Meßgrößen umwandeln, bei Bedarf abspeichern, und insbesondere durch Vergleich mit Answahlkriterien entscheiden kann, ob aus einer Meßgröße, die faktisch jeden beliebigen Wert innerhalb des Meßbereiches annehmen kann, ein sensorischer Reiz mit konstantem Pegel zur Weiterverarbeitung erzeugt oder der Meßwert als uninteressant verworfen werden muß,

wobei die Gesamtheit der sensorischen Reize, hierarchisch gestuft, in jedem Programmzyklus zur Ableitung von aktorischen Reizen mit festem Pegel über entsprechende Steuerkriterien zum Ansprechen der Aktoren und damit zur Bildung komplexer, miteinander vernetzter Regelkreise verwendet wird.

2.  System nach Anspruch 1, dadurch gekennzeichnet, daß

das System über ein Netzwerk oder ein Bussystem mit anderen Systemen gleicher Art und / oder externen Rechnern als Zentrale gekoppelt wird, sodaß jedes System über seine Kennung ansprechbar ist zwecks Abfrage von Daten, Auslesen des Speichers und Eingabe neuer Auswahl- und Steuerkriterien zur Anpassung der Regelkreise an veränderte Bedingungen, und jedes einzelne System, selbst wenn es im Inselbetrieb autonom arbeitet, Alarmmeldungen beispielsweise an die Zentrale abgeben kann.

3.  System nach Ansprüchen 1 und 2, dadurch gekennzeichnet, daß

sensorische und aktorische Neuronen vorzugsweise in einem Gehäuse mit rundem oder rechteckigen Querschnitt aus schlagfestem Material vorzugsweise wasserdicht gekapselt sind, mit dichten und zugentlasteten Durchführungen für die Kabel und dichten Steckverbindungen, wobei insbesondere die Gehäuse über Dichtungen in zwei oder meherer Teile aufgegliedert sind, und die Gesamtheit der elektronischen Bauteile in einem der Teile verankert ist, und das Terminal, bestehend aus LC-Anzeige oder Plasmaanzeige und Tastatur und/oder magnetisch zu betätigenden Schaltern vorzugsweise unter einer transparenten Deckelscheibe angeordnet sind.

4.  System nach Ansprüchen 1, 2 und 3, dadurch gekennzeichnet, daß

die Energieversorgung der sensorischen Neuronen vom aktorischen Neuron, die Energieversorgung des aktorischen Neurons sowie der angeschlossenen Aktoren oder deren Schalteinrichtungen von einer separaten Energieversorgungseinheit in gleicher Schutzart wie das aktorische Neuron gewährleistet wird, wobei die Energieversorgung beispielsweise über zwei getrennte Kreise gleicher Spannung aber unterschiedlicher Stromstärke und Stabilisierung durchgeführt wird.

Fig. 1

(3)

(1)

(2)

Meßgrößen

Reiz

Fig. 2

(14)

(4)

(5)

(8)    (9)

(10)

(11)

(6)

(7)

(12)

(13)